Europäisches Patentamt

European Patent Office

Office européen des brevets

(19)

(11) Numéro de publication: **0 188 983**
**A1**

(12) **DEMANDE DE BREVET EUROPEEN**

(21) Numéro de dépôt: 85420238.9

(22) Date de dépôt: 19.12.85

(51) Int. Cl.⁴: **B 23 Q 1/14,** B 23 Q 16/00

(30) Priorité: 21.12.84 FR 8420149

(43) Date de publication de la demande: 30.07.86
Bulletin 86/31

(84) Etats contractants désignés: CH DE GB IT LI SE

(71) Demandeur: **SOCIETE DE RECTIFICATION CYLINDRIQUE FRANCAISE S.R.C.F., 37, Rue Colin, F-69100 Villeurbanne (FR)**

(72) Inventeur: **Coster, Jean-Claude, Lieudit "Le Village Jardin, F-38200 Vienne (FR)**
Inventeur: **Montabert, Roger, 57 Avenue des Frères Lumière, F-69007 Lyon (FR)**

(74) Mandataire: **Maisonnier, Jean, 28 rue Servient, F-69003 Lyon (FR)**

(54) Porte-pièce à décalage angulaire de precision, pour une machine outil, et notamment pour une rectifieuse.

(57) L'invention concerne une machine-outil dont le berceau (4) porte une pièce (1) à usiner.

Verrouillé sur la table (6) par dépression, le berceau (4) peut se retourner autour de l'axe (10) d'un pivot. Ses touches (11), (12), le positionnent par contact avec des butées escamotables (13). L'axe (10) est porté par un chariot à mouvement transversal.

Application: suppresssion des réglages, lorsqu'on retourne la pièce (1).

La présente invention est relative à des perfectionnements apportés à une machine-outil notamment à une rectifieuse ou à une aléseuse, pour améliorer la précision du positionnement d'une poupée porte-pièce , notamment pour permettre de la décaler angulairement entre deux opérations successives d'usinage, sans qu'il soit nécessaire à chaque fois de procéder à un nouveau réglage.

La présente invention concerne plus particulièrement quoique non exclusivement, une poupée porte-pièce tubulaire, susceptible d'être retournée de 180° entre deux opérations successives d'usinage, ce qui permet notamment de rectifier l'intérieur d'un alésage présentant successivement chacune de ses deux extrémités devant le même outil.

Une machine-outil selon l'invention comprend une poupée porte-pièce susceptible d'être immobilisée devant un outil d'usinage, et elle est caractérisée en ce que la poupée porte pièce comporte au moins deux butées de positionnement escamotables tandis qu'elle est mobile en rotation autour d'un pivot, lequel peut lui-même se déplacer transversale ment pour autoriser les mouvements relatifs des butées et de la poupée.

Suivant une autre caractéristique de l'invention, l'immobilisation de la poupée sur son berceau s'effectue par l'application d'une dépression sous sa face inférieure, l'effort de verrouillage étant ainsi réparti sur toute sa surface pour éviter toute déformation locale. Grâce à cette disposition, le système selon l'invention permet d'usiner des pièces avec une grande précision, par exemple de l'ordre du micron pour usiner les deux extrémités d'un alésage après son retournement face pour face.

Suivant une autre caractéristique de l'invention, le coussin pneumatique défini sous la face inférieure de la poupée est alternativement mis en dépression (pour verrouiller la poupée porte-pièce pendant l'usinage), et en surpression (pour décoller la poupée porte-pièce après déverrouillage , afin de faciliter sa rotation autour du pivot central).

Le dessin annexé, donné à titre d'exemple non limitatif, permettra de mieux comprendre les caractéristiques de l'invention.

Figure 1 est une vue en perspective montrant shcématiquement les principaux organes selon l'invention , pour une machine-outil en position d'usinage .

Figures 2 et 3 montrent deux positons intermédiaires , pendant le processus de retournement selon l'invention .

Figure 4 est une vue suivant IV ( figure 1) montrant le volet de butées en cours d'abaissement .

Figure 5 est une vue analogue , montrant la machine prête à être à nouveau utilisée, après le retournement de la pièce.

Figure 6 est une perspective en coupe , montrant , à grande échelle , le détail du coulisseau portant le pivot du berceau porte-pièce.

Figure 7 correspond à la figure 1 , pour une autre variante de réalisation possible de la machine selon l'invention.

La machine illustrée sur les dessins est destinée , par exemple , à usiner l'alésage 2 d'une pièce 1. Pour cela , la pièce 1 est immobilisée dans une poupée 3 , laquelle est solidaire d'un berceau 4 . La face inférieure 5 du berceau 4 est plane , et elle repose sur une table plane fixe 6 .

La liaison entre le berceau mobile 4 et la table fixe présente , selon l'invention , les particularités suivantes :

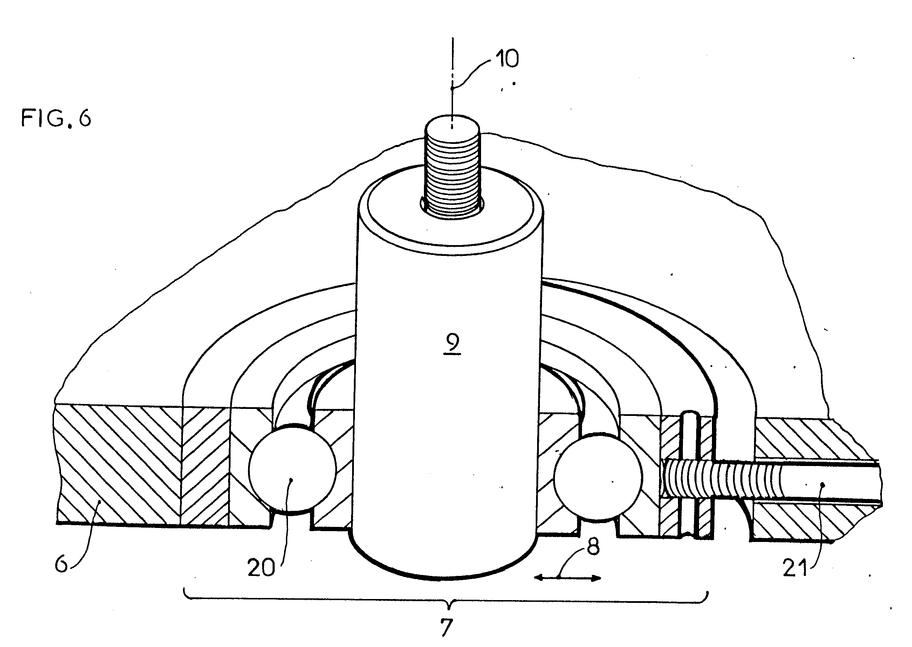

- la table horizontale 6 contient un chariot 7 , mobilé dans un mouvement transversal horizontal ( figure 6 , flèche double 8) , ce chariot 7 portant par ailleurs un pivot vertical 9 , autour de l'axe 10 duquel peut tourner l'ensemble du berceau 4 ;

- la face supérieure de la table 6 comporte des moyens connus non représentés susceptibles d'appliquer une dépression sur la face inférieure 5 du berceau 4 , pour le verrouiller, ou au contraire,d'annuler cette dépression , pour libérer les mouvements du berceau 4 par rapport à la table fixe ;

- le berceau 4 comporte plusieurs jeux de touches de positionnement angulaire 11 et 12 , susceptibles de coopérer

3

avec des butées de répérage escamotables 13 .

Dans l'exemple illustré , le berceau 4 comporte un jeu de deux touches 11 , puis , diamétralement opposé par rapport à l'axe de pivotement 10, un jeu de deux touches 12 . Chaque touche 11 et 12 comporte préférablement , sur son extrémité supérieure , une rampe oblique 14 .

Les deux butées 13 sont portées par un volet 15 , qui est relevable autour d'un axe horizontal 16, porté par la table 6 . Ce volet 15 peut être équipé d'une poignée 17 , dans le cas où ses mouvements de relevage et d'abaissement sont commandés à la main . Par ailleurs , au voisinage de chaque butée 13 , et en dessous d'elles , se trouve un galet de positionnement précis 18 , dont l'axe 19 est solidaire de la face inférieure du volet 15 .

Le chariot 7 porte le pivot 9 , par exemple par l'intermédiaire d'un roulement à billes, ou à galet 20 ( figure 6) . L'extérieur du roulement 8 , c'est-à-dire le corps du chariot 7 , est solidaire d'une tige horizontale 21 , dont on commande le coulissement longitudinal en faisant plus ou moins tourner une poignée 22 , située à l'extérieur , sur le côté de la table 6 .

Le fonctionnement est le suivant :

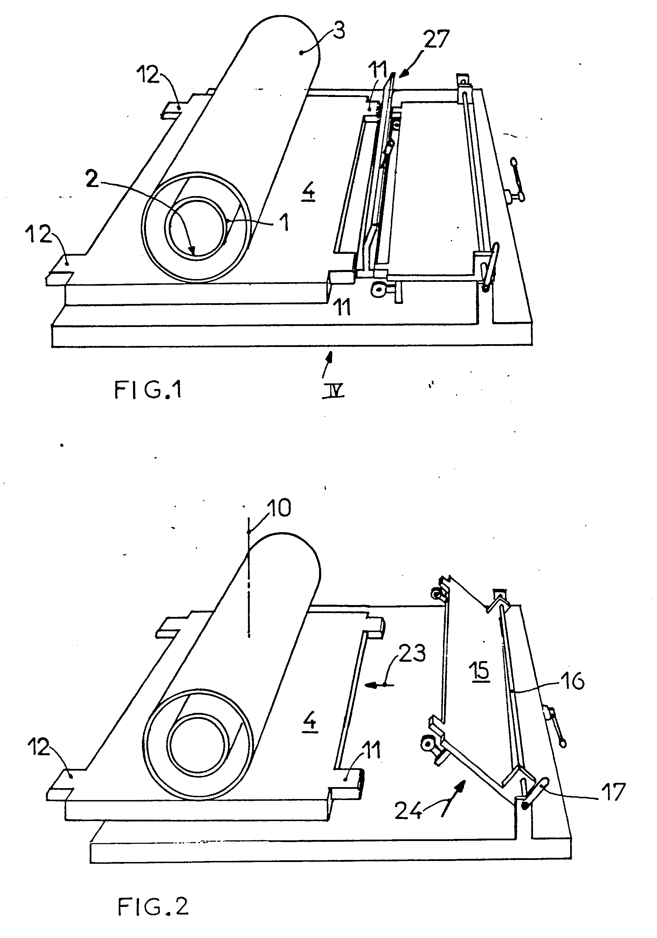

La poupée 3 et son berceau 4 étant à la position illustrée sur la figure 1 , la machine-outil est utilisée pour effectuer certaines opérations d'usinage ,notamment la rectification de l'alésage 2 sur la moitié de sa longueur . Une fois ces opérations terminées , on désire retourner la pièce 2 de 180° , par rotation autour du pivot vertical 10 , pour ensuite la verrouiller sans qu'il soit nécessaire d'effecteur un nouveau réglage quelconque avant de reprendre l'usinage ( par exemple pour rectifier l'alésage 2 sur l'autre moitié de sa longueur) .

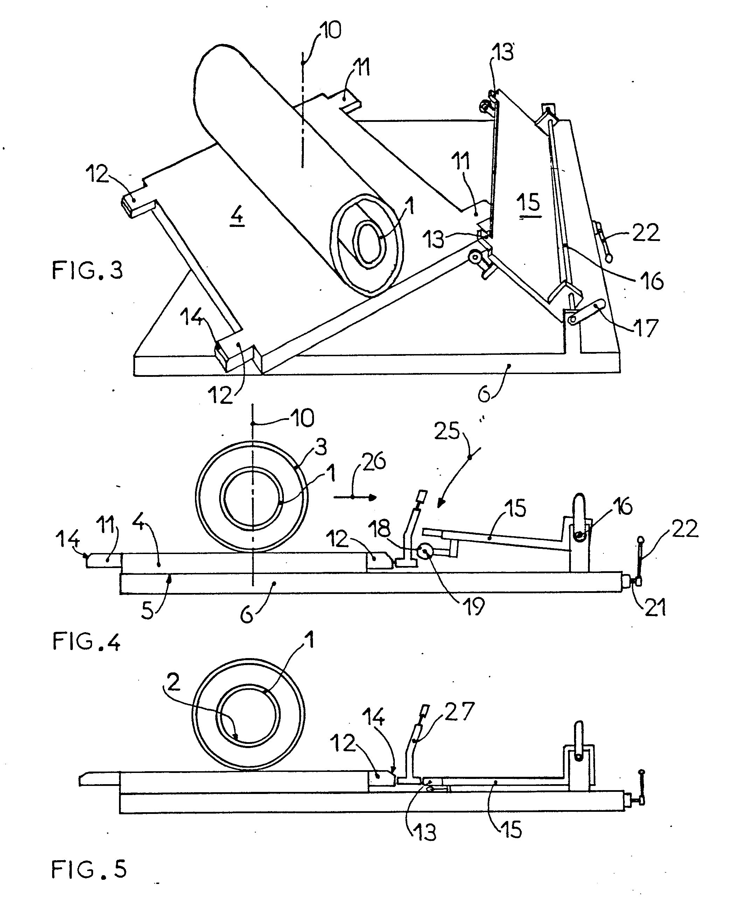

Pour cela , on commence par relâcher la dépression qui maintenait le berceau 4 appliqué contre la table 6 . Ensuite , on fait tourner la poignée 22 qui déplace le chariot 7 et le pivot 10 , en les éloignant de l'axe transversal 16( figure 2 , flèche 23) . On peut alors relever le volet 15 , par pivotement autour de l'axe 16 ,

4

comme illustré sur la figure 2 , par la flèche 24 .Il est alors possible de faire tourner l'ensemble du berceau 4 , de la poupée 3 et de la pièce 2 , par rotation de 180° autour de la nouvelle position de l'axe de pivotement 10 . Ce faisant , on amène les touches 12 face aux butées 13 ,qu'on abaisse en rabattant le volet 15 ( figure 4 , flèche 25) . Entre temps , en agissant sur la poignée 22 , on a fait reculer l'axe de pivotement 10 ( flèche 26) . Ainsi , à la fin de son mouvement d'abaissement , le volet 15 présente ses galets 18 qui entrent en contact avec les rampes inclinées 14 des touches 12 . Les mouvements horizontaux du pivot 10 et de son chariot 7 ayant été libérés , on comprend que l'abaissement des galets 18 sur les rampes 14 repousse l'ensemble mobile 4 , 7 , 1 , dans le sens indiqué sur la figure 5 par la flèche 27 , et ceci très exactement de la quantité juste nécessaire pour que les touches 12 soient juste en contact avec les butées 13 . Au besoin , la réalisation exacte de ce contact peut être contrôlée en repoussant tout simplement l'équipage mobile 1 , 3 , 4 , contre les butées 13 ( dans le sens indiqué par la flèche 26) .Une fois cette opération terminée , il ne reste plus qu'à verrouiller le berceau 4 sur la table fixe 6 , en créant à nouveau la dépression qui les assemble . Aucun réglage supplémentaire n'est nécessaire avant de reprendre l'usinage de la pièce 1 qui est parfaitement positionnée .

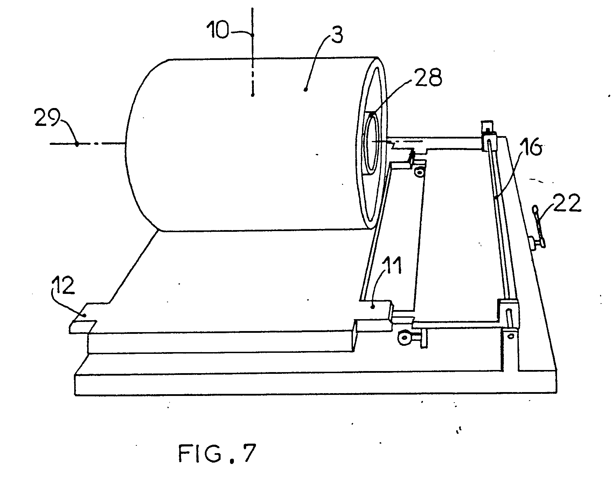

Dans l'exemple illustré sur les figures 1 à 6 , on a supposé que l'alésage 2 à rectifier est orienté parallèlement à l'axe 16 autour duquel se rabat le volet 15. Bien entendu , on pourrait également prévoir ( figure 7) une pièce 28 dont l'axe géométrique 29 serait orienté perpendiculairement à la direction de l'axe 16 . Dans ce cas ,il suffirait de positionner différemment les touches 11 et 12 sur le berceau 4 , où elles occuperaient , comme illustré sur la figure 7 , des positions décalées de 90° par rapport au pivot vertical 10.

Bien entendu , bien que les exemples précédents concernent le retournement de 180° de la pièce 1 ou 28 , on ne quitterait pas le cadre de l'invention en utilisant la machine pour tout autre déplacement angulaire de la

5

pièce ( par exemple 90° , ou tout autre angle intermédiaire).

De même , on peut équiper le volet 15 et/ou le berceau 4 de tout comparateur de type connu , pneumatiques ou autres , pour constater après coup si le positionnement a été correct après retournement . Il est clair que ces comparateurs jouent un simple rôle de contrôle a posteriori , sans aucune fonction , ni de commande , ni d'asservissement .

6

REVENDICATIONS

1 -Machine-outil comprenant une poupée (3) qui porte une pièce (1) , (28) ,susceptible d'être immobilisée sur une table fixe (6) devant un outil d'usinage , caractérisée en ce que la poupée porte-pièce (3) comporte au moins deux butées de positionnement escamotables (13) , tandisqu'elle est mobile en rotation autour de l'axe (10) d'un pivot (9) ,lequel peut lui-même se déplacer transversalement (flèche (8) pour autoriser les mouvements relatifs des butées (13) et de la poupée (3).

2 - Machine-outil suivant la revendication 1, caractérisée en ce que l'immobilisation du berceau (4) sur sa table (6) s'effectue par l'application d'une dépression sous sa face inférieure (5) , l'effort de verrouillage étant ainsi réparti sur toute sa surface , pour éviter toute déformation locale , ce qui permet d'usiner des pièces (1),(28) avec une grande précision , par exemple de l'ordre du micron, pour usiner les deux extrémités d'un alésage (2) , après son retournement face pour face.

3 - Machine-outil suivant la revendication 2, caractérisée en ce que le coussin pneumatique défini sous la face inférieure (5) du berceau (4) est alternativement mis en dépression ( pour verrouiller la poupée porte-pièce (3) pendant l'usinage) , et en surpression ( pour décoller la poupée porte-pièce (3) après déverrouillage, afin de faciliter sa rotation autour du pivot central (9) .

4 -Machine-outil suivant l'une quelconque des revendications précédentes , caractérisée en ce que les butées (13) sont portées par un volet (15) , relevable autour d'un axe (16) orthogonal à l'axe (10) du pivot (9).

5 -Machine-outil suivant l'une quelconque des revendications précédentes , caractérisée en ce que chaque butée escamotable (13) est solidaire de l'axe (19) d'un galet fou (18) , lequel est susceptible de coopérer avec une rampe oblique (14) du berceau mobile (4).

6 - Machine-outil suivant l'une quelconque des revendications précédentes , caractérisée en ce que le berceau (4) comporte au moins deux jeux de touches (11) et (12) susceptibles de coopérer , à tour de rôle , avec les butées

7

escamotables (13) , pour définir le positionnement angulaire exact du berceau (4) avant son verrouillage par dépression sur la table (6).

7 - Machine-outil suivant l'une quelconque
des revendications précédentes , caractérisée en ce que le
pivot (9) est porté par un chariot (7) dont les déplacements
perpendiculaires à son axe (10) sont commandés par des
moyens extérieurs à la table (6).

8 - machine-outil suivant la revendication
7 , caractérisée en ce que les moyens pour commander les
déplacements transversaux du chariot (7) sont constitués par
une poignée tournante (22) , prévue suur un côté de la table (6).

9 - Machine-outil suivant l'une quelconque
des revendications 1 à 7, caractérisée en ce que ses différents mouvements sont automatisés.

FIG.1

FIG.2

FIG.3

FIG.4

FIG.5

FIG. 6

10

9

6

20

8

7

21

0 188 983

FIG. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 365 373 (ARNOLD) <br> * Page 2, lignes 3-22 * | 1 | B 23 Q 1/14 <br> B 23 Q 16/00 |
| Y | | 2,3,6-9 | |
| Y | CH-A- 468 242 (STUDER) <br> * Revendication et sous-revendication 4 * | 2,3 | |
| Y | GB-A-1 343 429 (WINDLEY) <br> * Revendication 1 * | 3,7,9 | |
| Y | DE-A-2 058 171 (FISCHER) | 6 | |
| Y | DE-A-2 233 394 (HORN) <br> * Revendication 5 * | 8 | DOMAINES TECHNIQUES RECHERCHES (Int. Cl.4) |
| A | GB-A- 342 792 (WILSON) | | B 23 Q |
| A | FR-A- 995 632 (S.A.P.P.I.) | | |
| A | DE-A-3 107 436 (ESS) | | |

Le présent rapport de recherche a été établi pour toutes les revendications

| Lieu de la recherche | Date d'achèvement de la recherche | Examinateur |
|---|---|---|
| LA HAYE | 25-03-1986 | DE GUSSEM J.L. |